Europäisches Patentamt

European Patent Office

Office européen des brevets

(19)

(11) **EP 1 724 792 A1**

(12) **DEMANDE DE BREVET EUROPEEN**

(43) Date de publication:
**22.11.2006 Bulletin 2006/47**

(21) Numéro de dépôt: **05291098.1**

(22) Date de dépôt: **20.05.2005**

(51) Int Cl.:
*H01F 41/02* (2006.01)  *H01F 1/147* (2006.01)
*H01F 1/153* (2006.01)  *B21B 27/00* (2006.01)
*B21B 1/00* (2006.01)

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(71) Demandeur: **Imphy Alloys**
**92800 Puteaux (FR)**

(72) Inventeurs:
• **Waeckerle, Thierry**
**58000 Nevers (FR)**

• **Save, Thierry**
**58660 Coulanges les Nevers (FR)**
• **Demier, Alain**
**58640 Varennes Vauzelles (FR)**

(74) Mandataire: **Plaisant, Sophie Marie**
**Usinor DIR-PI,**
**Immeuble "La Pacific" - TSA 10001**
**92070 La Défense Cédex (FR)**

(54) **Procédé de fabrication d'une bande en matériau nanocristallin et dispositif de fabrication d'un tore enroulé à partir de cette bande**

(57) L'invention concerne un procédé de fabrication d'une bande en matériau nanocristallin obtenue à partir d'un ruban coulé dans un état amorphe, de composition atomique :

$$[Fe_{1-a}M_a]_{100-x-y-z-\alpha-\beta-\gamma}Cu_xSi_yB_zNb_\alpha M'_\beta M''_\gamma$$

M étant l'un au moins des éléments Co, Ni,
M'étant l'un au moins des éléments V, Cr, Al et Zn,
M" étant l'un au moins des éléments C, Ge, P, Ga, Sb, In et Be, avec :

$$a \leq 0,07 \text{ si } M = Co \quad et \quad a \leq 0,2 \text{ si } M = Ni$$
$$0,5 \leq x \leq 1,5 \quad et \quad 2 \leq \alpha \leq 5$$
$$10 \leq y \leq 16,9 \quad et \quad 5 \leq z \leq 8$$
$$\beta \leq 2 \quad et \quad \gamma \leq 2$$

et en soumettant le ruban amorphe à un recuit de cristallisation, dans lequel on soumet le ruban au recuit à l'état déroulé, en défilement au travers d'au moins deux blocc en S et sous tension dans une direction sensiblement longitudinale axiale du ruban, de telle sorte que le ruban soit maintenu à une température de recuit comprise entre 530°C et 700°C, pendant une durée comprise entre 5 et 120 secondes, sous une contrainte de traction axiale comprise entre 2 et 1000 MPa, la contrainte de traction subie par ledit ruban amorphe, sa vitesse de défilement lors dudit recuit, le temps et la température de recuit étant choisis de telle sorte que le profil de section de la bande ne soit pas en forme de Ω, et présente une flèche maximale de la section transversale de la bande inférieure à 3% de la largeur de la bande, et de préférence inférieure à 1% de la largeur, ainsi que la bande et le tore obtenu et le dispositif de mise en oeuvre du procédé.

EP 1 724 792 A1

**Description**

La présente invention concerne un procédé de fabrication d'une bande en matériau nanocristallin, un dispositif de fabrication d'un tore enroulé à partir de cette bande, ainsi que les tores en question et les composants qui les intègrent.

La fabrication de tores en matériau nanocristallin à faible perméabilité ($\mu \leq 1000$) à partir de rubans amorphes de type FeCuNbSiB que l'on transforme par un recuit est en particulier divulguée dans le brevet FR 2 823 507.

Ce document décrit notamment un procédé de recuit sous contrainte de ces rubans amorphes, qui réduit significativement l'extrême fragilité des nanocristallins qui ne pouvaient précédemment pas être manipulés après nanocristallisation en tore. Ce procédé de recuit sous contrainte permet d'obtenir des propriétés mécaniques telles qu'on peut réaliser l'enroulement de la bande sans risque de rupture, et qu'on puisse également la dérouler et la ré-enrouler en conservant toujours les mêmes mandrins d'enroulage.

Ces propriétés mécaniques améliorées sont dues à l'obtention d'une section de bande nanocristallisée en forme de $\Omega$, présentant au minimum des points d'inflexion, avec une flèche supérieure à 1% de la largeur. Cette conformation correspond à un état moins fragile qu'un nanocristallin classique permettant en particulier de dérouler puis ré enrouler le ruban cristallisé sur le même mandrin, mais cet état à profil marqué en $\Omega$ reste encore trop fragile pour être manipulé et déroulé/rembobiné sur des mandrins de diamètre inférieur et en particulier jusqu'à obtenir des tores de diamètre inférieur ou égal à 10 mm.

De plus, du fait du profil en $\Omega$, les performances magnétiques et le pourcentage de casse au ré-enroulage ne sont pas indépendants de la face de la bande qui est tournée vers l'extérieur du tore. Lorsque la bosse du $\Omega$ est orientée vers l'extérieur du tore, les performances sont meilleures et le taux de casse au ré-enroulage est faible ; inversement pour la bosse $\Omega$ orientée vers l'intérieur du tore. Ainsi, en production, soit il faut permettre au ruban d'être systématiquement avec bosse du $\Omega$ à l'extérieur des tores produits, ce qui exige un contrôle supplémentaire, et un procédé plus complexe à mettre en oeuvre, soit le rendement de production sera dégradé et les performances hétérogènes.

En outre, lors de l'enroulage automatisé en tore, la tête de ruban peut très difficilement être aspirée et plaquée sur le mandrin d'enroulage puisque le profil en $\Omega$ empêche une bonne aspiration et adhérence de la tête de ruban par ce phénomène de dépression.

Par ailleurs, on constate que plus la perméabilité de la bande augmente, plus elle est fragile dans son état final et son taux de casse devient important. Ce procédé ne permet donc pas de produire de façon industrielle une bande nanocristalline, en particulier lorsque sa perméabilité dépasse 1000.

Enfin, la fragilité réduite mais encore importante de la bande obtenue selon l'art antérieur permet d'atteindre une vitesse de défilement qui ne dépasse pas 3 cm/s.

Or, on considère qu'un procédé de recuit de nanocristallisation est industriel s'il permet d'atteindre un taux de casse du ruban amorphe inférieure à 10 casses par km, avec une vitesse de défilement supérieure ou égale à 10 cm par seconde et par mètre de zone utile de four (zone dont la température est supérieure ou égale à 500°C), et une plage de réglage de la température de recuit supérieure à 10°C (plage dans laquelle on peut faire varier la température de recuit sans changer significativement les performances de la bande, en particulier sa fragilité).

Le but de la présente invention est donc de proposer un procédé de fabrication de bandes nanocristallines apte à être mis en oeuvre à une échelle industrielle, ainsi qu'un produit nanocristallin pouvant être manipulé et utilisé pour des géométries de circuits magnétiques plus compactes que celles de l'art antérieur, avec, en particulier, un rayon d'enroulage beaucoup plus faible que celui connu jusqu'ici.

A cet effet, l'invention a pour premier objet un procédé de fabrication d'une bande en matériau nanocristallin obtenue à partir d'un ruban coulé dans un état amorphe, de composition atomique :

$$[Fe_{1-a}M_a]_{100-x-y-z-\alpha-\beta-\gamma}Cu_xSi_yB_zNb_\alpha M'_\beta M''_\gamma$$

M étant l'un au moins des éléments Co, Ni,
M' étant l'un au moins des éléments V, Cr, Al et Zn,
M'' étant l'un au moins des éléments C, Ge, P, Ga, Sb, In et Be, avec :

$$a \leq 0,07 \text{ si } M = Co \qquad \text{et} \qquad a \leq 0,2 \text{ si } M = Ni$$
$$0,5 \leq x \leq 1,5 \qquad \text{et} \qquad 2 \leq \alpha \leq 5$$
$$10 \leq y \leq 16,9 \qquad \text{et} \qquad 5 \leq z \leq 8$$
$$\beta \leq 2 \qquad \text{et} \qquad \gamma \leq 2$$

et en soumettant le ruban amorphe à un recuit de cristallisation, dans lequel on soumet le ruban au recuit à l'état déroulé, en défilement au travers d'au moins deux blocs en S et sous tension dans une direction sensiblement longitudinale axiale du ruban, de telle sorte que le ruban soit maintenu à une température de recuit comprise entre 530°C et 700°C, pendant une durée comprise entre 5 et 120 secondes, sous une contrainte de traction axiale comprise entre 2 et 1000 MPa, la contrainte de traction subie par ledit ruban amorphe, sa vitesse de défilement lors dudit recuit, le temps et la température de recuit étant choisis de telle sorte que le profil de section de la bande ne soit pas en forme de $\Omega$, et présente une flèche maximale de la section transversale de la bande inférieure à 3% de la largeur de la bande, et de préférence inférieure à 1 % de la largeur.

Les présents inventeurs ont constaté, de façon tout à fait surprenante qu'il était possible de réduire de façon considérable la fragilité des bandes nanocristallines en leur conférant une section plane, ne présentant pas de profil en $\Omega$. Cette réduction de fragilité permet de diminuer considérablement le taux de casse au km et d'augmenter la vitesse de défilement de la bande.

Sans vouloir être lié par une théorie, les présents inventeurs ont en effet découvert que, à vitesse de défilement donnée et contrainte de traction donnée, plus la température ou le temps de recuit sous contrainte croit, plus la fraction cristallisée $f_X$ augmente jusqu'à atteindre une fraction cristallisée critique $f_X{}^c$, dépendant du niveau de contrainte. Si $f_X$ devient supérieur à cette fraction critique $f_X{}^c$, alors le profil en $\Omega$ commence à apparaître et le matériau devient nettement plus fragile.

Par ce nouveau procédé impliquant un réglage adapté des conditions de recuit (contrainte de traction, vitesse de défilement, temps et température de recuit), il est possible de stabiliser la production à une fraction cristallisée inférieure à la fraction recristallisée critique, de façon à éviter un profil de section de bande en $\Omega$. On obtient ainsi une bande apte à être prise facilement en début d'enroulage, à être bobinée sur de grands diamètres sans faux ronds, et à être enroulée efficacement et indistinctement avec l'une ou l'autre de ses faces tournée vers l'extérieur du tore.

Le procédé selon l'invention peut en outre présenter les caractéristiques suivantes, prises seules ou en combinaison :

- la vitesse de défilement de la bande est supérieure ou égale à 10 cm par seconde et par mètre de zone utile de four,
- la contrainte de traction axiale est supérieure à 500 MPa,
- le taux de casse du ruban amorphe en défilement est inférieur à 10 casses par kilomètre de ruban,
- y est supérieur ou égal à 12.

Dans un mode de réalisation préféré, la composition du ruban amorphe est choisie de telle sorte que :

$a \le 0{,}07$ si M = Co    et    $a \le 0{,}1$ si M = Ni
$0{,}5 \le x \le 1{,}5$   et   $2 \le \alpha \le 5$
$13 \le y \le 16{,}6$   et   $5{,}8 \le z \le 8$
$\beta \le 2$   et    $\gamma \le 2$

Dans un autre mode de réalisation préféré, la composition du ruban amorphe est choisie de telle sorte que :

$a \le 0{,}02$ si M = Co    et    $a \le 0{,}05$ si M = Ni
$0{,}5 \le x \le 1{,}5$   et   $2{,}5 \le \alpha \le 4$
$14{,}5 \le y \le 16{,}5$    et    $5{,}8 \le z \le 7{,}5$
$\beta \le 1$   et   $\gamma \le 1$

Ces deux derniers modes de réalisation employant des gammes de composition particulières sont plus particulièrement utiles pour la fabrication de capteurs de courant aptes à mesurer un courant comportant une forte composante continue et pouvant être utilisés dans un compteur d'énergie à simple ou double étage, comprenant au moins un tore en ledit matériau nanocristallin, ainsi que pour la fabrication d'inductances de stockage ou de filtrage, indépendantes du niveau de composante continue superposée, pouvant être utilisées dans un compteur d'énergie, comprenant au moins un tore en ledit matériau nanocristallin.

Un deuxième objet de l'invention est constitué par une bande en matériau nanocristallin pouvant être obtenue par la mise en oeuvre du procédé selon l'invention, apte à subir en tout endroit de cette bande, un pliage avec un diamètre de courbure d'au plus 3mm, sans présenter de casse ni de fissure.

La bande selon l'invention peut en outre présenter les caractéristiques suivantes, prises seules ou en combinaison :

- bande obtenue par la mise en oeuvre du procédé selon l'invention à partir d'un ruban amorphe, l'épaisseur de ladite bande étant réduite d'au moins 10% par rapport à l'épaisseur dudit ruban amorphe,
- bande dont le champ coercitif est inférieur ou égal à 7A/m, et de préférence inférieur ou égal à 5A/m,
- bande dont l'induction à 200Oe est supérieure ou égale à 12kG.

Un troisième objet de l'invention est constitué par un tore en matériau nanocristallin pouvant être obtenu par la mise en oeuvre du procédé selon l'invention à l'issue duquel on enroule ladite bande nanocristalline, et dont la perméabilité est supérieure ou égale à 50 et inférieure à 200, et dont la fréquence de coupure est comprise entre 30 et 200MHz, et par un tore dont le diamètre est inférieur ou égal à 10 mm.

Dans un mode de réalisation préféré, le tore selon l'invention présente une diminution du foisonnement d'au plus 3% par rapport au foisonnement obtenu par enroulement d'une bande de même composition ayant subir un recuit de cristallisation sans contrainte, et ce pour une réduction d'épaisseur de la bande nanocristallisée allant jusqu'à 10% par rapport à l'épaisseur du ruban amorphe de départ.

Dans un autre mode de réalisation préféré, le tore selon l'invention est obtenu par le procédé selon l'invention, à l'issue duquel on enroule une première fois ladite bande nanocristalline sur un premier mandrin, puis par déroulage et enroulage ultérieur sur un second mandrin, le diamètre du second mandrin étant inférieur au diamètre du premier mandrin.

Un quatrième objet de l'invention est constitué par un dispositif (1) de fabrication d'un tore magnétique à partir d'un ruban (R) coulé dans un état amorphe, par recuit dudit ruban (R) amorphe,qui comporte :

- un arbre de réception (2) d'une bobine de ruban (R) à l'état amorphe,
- un four à passage (3) régulé en température,
- au moins un bloc en S (4) situé avant l'entrée du ruban (R) dans le four (3) et relié à un moteur frein (5),
- un dispositif (6) de réglage d'une contrainte de traction dans la direction axiale dudit ruban amorphe (R) et de la bande (N) en matériau nanocristallin, ledit dispositif (6) comprenant un dispositif de mesure d'effort relié à un module de commande du moteur frein (5) dudit bloc en S situé (4) avant l'entrée du ruban (R) dans le four (3),
- au moins un bloc en S (7) situé après la sortie de la bande (N) du four à passage (3) et relié à un moteur,
- au moins un mandrin d'enroulement (8) pour l'enroulement de la bande (N) obtenue après recuit sous la forme d'un tore en matériau nanocristallin,

le ruban amorphe (R) passant d'une bobine de stockage du ruban amorphe (R) engagée sur ledit arbre de réception (2), à la bobine de bande (N) en matériau nanocristallin, successivement à travers le bloc en S (4) situé avant l'entrée du ruban (R) dans le four (3), puis à travers le dispositif de mesure d'effort (6), puis à travers le four (3), puis à travers le bloc en S (7) situé après la sortie de la bande (N) du four (3).

Le dispositif selon l'invention peut en outre présenter les caractéristiques suivantes, prises seules ou en combinaison :

- le dispositif comprend un premier mandrin d'enroulement de la bande et un second mandrin d'enroulement de la bande, de sorte qu'on puisse, après enroulement d'un premier tore sur le premier mandrin, couper la bande (N) et engager une partie de tête de la bande (N) sur le second mandrin, pour réaliser l'enroulement d'un second tore, sans interrompre la fabrication,
- le dispositif comprend un seul mandrin d'enroulement (8) de la bande (N) et un accumulateur de bande (9) en aval dudit bloc en S (7) de sortie du four (3), permettant de changer de bobine d'enroulage sans interrompre la fabrication,
- le dispositif comprend en outre au moins un galet presseur (10) qui vient comprimer la bande (N) recuite lors de son passage dans le bloc en S (7) situé après la sortie de la bande (N) du four à passage (3),
- le dispositif comprend en outre au moins un galet bombé qui vient comprimer le ruban amorphe (R) lors de son passage dans le bloc en S (4) situé avant l'entrée dudit ruban (R) dans le four (3).

Ce dispositif permet d'obtenir une section plane telle qu'elle est recherchée selon l'invention. Il faut noter qu'il n'était pas possible pour l'homme du métier de prédire qu'une bande nanocristalline pourrait suivre les courbures fortes et alternées de bloc en S avec les fortes contraintes de traction superposées, et ce sans casse pendant un voire plusieurs kilomètres de ruban.

L'invention va a présent être décrite en référence aux planches de figures annexées qui représentent :

- figure 1 : dispositif du brevet FR 2 823 507,
- figure 2 : vue schématique d'un dispositif selon l'invention.

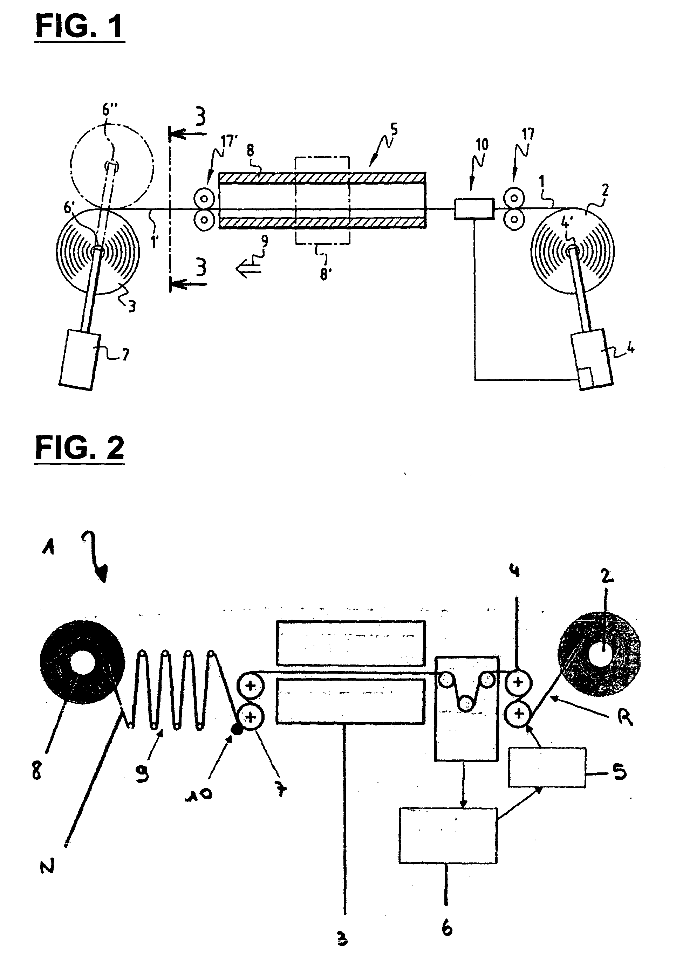

Les alliages utilisés pour la fabrication de bandes nanocristallines selon la présente invention ont la composition atomique suivante :

$$[Fe_{1-a}M_a]_{100-x-y-z-\alpha-\beta-\gamma}Cu_xSi_yB_zNb_\alpha M'_\beta M''_\gamma$$

M étant l'un au moins des éléments Co, Ni,

M' étant l'un au moins des éléments V, Cr, Al et Zn,

M" étant l'un au moins des éléments C, Ge, P, Ga, Sb, In et Be, avec :

$$a \leq 0,07 \text{ si M = Co} \qquad \text{et} \qquad a \leq 0,2 \text{ si M = Ni}$$
$$0,5 \leq x \leq 1,5 \qquad \text{et} \qquad 2 \leq \alpha \leq 6$$
$$10 \leq y \leq 16,9 \qquad \text{et} \qquad 5 \leq z \leq 8$$
$$\beta \leq 2 \qquad \text{et} \qquad \gamma \leq 2$$

Dans la présente demande, sauf mention contraire, tous les pourcentages se rapportant à des compositions sont des pourcentages atomiques.

L'utilisation d'un élément amorphisant tel que le bore permet d'obtenir par coulée avec un refroidissement à grande vitesse, un matériau amorphe, généralement sous la forme d'un ruban mince qui est ensuite recuit pour obtenir un matériau de type nanocristallin, c'est à dire un matériau contenant plus de 50% en volume de cristaux présentant une taille inférieure à 100 nm, dans une phase amorphe constituant le solde du volume du matériau.

Dans le cadre de la présente invention, le pourcentage atomique en bore est compris entre 5 et 8%. En effet, si la teneur en bore est trop faible, sans substitution partielle par un autre amorphisant, le ruban devient très difficile à rendre amorphe par un procédé conventionnel d'élaboration par trempe sur roue. En pratique, on ne peut avoir moins de 5% de bore, et on préfère en avoir plus de 6%.

A l'inverse, en accroissant le pourcentage en bore, la cristallisation au défilé sous contrainte est rendue difficile, ce qui oblige à diminuer la vitesse V de défilement et limite donc la plage de perméabilité accessibles ($\mu_{min} \geq 300$) et surtout dégrade très fortement le champ coercitif Hc, qui atteint des valeurs supérieures à 13 A/m. En conséquence, la teneur maximale en bore doit être limitée à 8%.

Les éléments regroupés sous la lettre M", à savoir C, Ge, P, Ga, Sb, in et Be sont également des éléments amorphisants. La substitution partielle du bore par un ou plusieurs de ces éléments est possible pour un niveau de substitution limite, car le bore est l'amorphisant le plus efficace vis à vis des vitesses de trempe sur roue nécessaire à obtention d'un état 100% amorphe avant recuit de cristallisation sous traction. On limite donc ce taux de substitution des autres éléments amorphisants à 2%.

La teneur en cobalt de la bande selon l'invention est au maximum de 6% environ (a ≤ 0,07 et x, y, z, α, β et γ minimum). En effet, si on dépasse cette valeur, Hc est dégradé ainsi que les pertes magnétiques, ce qui est néfaste à une miniaturisation des composants fabriqués à partir de cette bande.

Le pourcentage atomique en cuivre de la composition selon l'invention est compris entre 0,5 et 1,5%. Le pourcentage en cuivre doit être maintenu au-dessus de 0,5%, car en deçà de cette valeur, la nucléation des nanocristaux n'est plus suffisante pour avoir des cristaux de petite taille et Hc croît démesurément. A contrario, si le pourcentage en cuivre est supérieur à 1,5%, de nombreux cristaux sont formés mais cela ne provoque pas d'amélioration visible des performances tandis que l'aimantation à saturation décroît.

Le pourcentage atomique en niobium de la composition selon l'invention est compris entre 2 et 5%. Cet élément est un inhibiteur de croissance, chargé de conserver une faible taille de cristaux lors de la croissance de ceux-ci. En dessous de 2% de niobium, l'inhibition est insuffisante et Hc croît sur tous les types de rubans nanocristallins, y compris ceux produits par nanocristallisation sous traction.

Si on accroît le pourcentage en niobium à 6% l'induction saturante B (20 Oe) se dégrade significativement et surtout on observe une fragilisation du ruban qui le rend très difficile à manipuler industriellement sans risque de casses fréquentes. En conséquence, le pourcentage maximum en niobium doit être conservé inférieur ou égal à 5%.

Le pourcentage atomique en silicium de la composition selon l'invention est compris entre 10 et 16,9%. Ce métalloïde permet de régler la magnétostriction du ruban nanocristallisé à une valeur très proche de zéro.

Dans un mode de réalisation préféré, la teneur en silicium de la bande selon l'invention est supérieure ou égale à 12%. En effet, en dessous de cette valeur, Hc se dégrade et atteint des valeurs de l'ordre de 8 A/m, provoquant des pertes magnétiques relativement élevées, bien qu'acceptables.

Les éléments regroupés sous la lettre M', à savoir V, Cr, Al et Zn, sont des métalloïdes pouvant remplacer de silicium, dans certaines limites. En effet, une substitution dépassant 2% s'écarte significativement de ces valeurs de magnétostriction, rendant le produit final sensible aux contraintes externes telles qu'enroulage du ruban sur lui-même (contrainte de courbure de la bande) et emballage.

Par ailleurs, pour une utilisation en stockage d'énergie, en lissage d'harmonique de courant ou encore des selfs de mode commun pour hautes fréquences, une grande linéarité B-H n'est pas forcément nécessaire ou utile ou intéressante et un rapport Br/Bm (Br induction rémanente, Bm induction à 20 Oe dite induction d'approche à saturation) de 10-15% peut être tout à fait suffisant.

En revanche dans certains cas de composants, tels que les inductances de filtrage où on désire atténuer de la même façon quelle que soit la composante continue superposée, les inductances de stockage où on désire stocker et transférer la même énergie du et au circuit électrique quelle que soit la composante continue superposée, les capteurs de courant où on désire mesurer et/ou transformer le courant avec la même précision quelle que soit la composante continue superposée, une forte linéarité B-H est nécessaire. Ceci revient à dire pour les alliages nanocristallisés sous traction au défilé que ces applications nécessitent un rapport Br/Bm inférieur ou égal à 3% et de préférence inférieure ou égal à 1%. Les présents inventeurs ont constaté de façon surprenant que les plages de composition qui viennent d'être décrites doivent être réduites pour atteindre de telles valeurs.

Ainsi, on obtient tous les avantages de l'invention déjà présentés précédemment et aussi une linéarité B-H améliorée, telle que le rapport Br/Bm soit inférieur ou égal à 3% à 20°C, en respectant les conditions supplémentaires suivantes :

$a \leq 0,07$ si $M = Co$      et      $a \leq 0,1$ si $M = Ni$
$0,5 \leq x \leq 1,5$      et      $2 \leq \alpha \leq 5$
$13 \leq y \leq 16,6$      et      $5,8 \leq z \leq 8$
$\beta \leq 2$      et      $\gamma \leq 2$

En outre, dans ce domaine de composition, on observe que le ratio $B_r/B_m$ entre 0 et 400°C est inférieur ou égal à 6 % et que le ratio $B_r/B_m$ entre 0 et 300°C est inférieur ou égal à 3%.

On obtient en outre une linéarité B-H optimale, telle que le rapport Br/Bm soit inférieur ou égal à 1 % à 20°C et de préférence inférieur ou égal à 0,7% à 20°C, en respectant les conditions supplémentaires suivantes :

$a \leq 0,02$ si $M = Co$      et      $a \leq 0,05$ si $M = Ni$
$0,5 \leq x \leq 1,5$      et      $2,5 \leq \alpha \leq 4$
$14,5 \leq y \leq 16,5$      et      $5,8 \leq z \leq 7,5$
$\beta \leq 1$      et      $\gamma \leq 1$

En outre, dans ce domaine de composition, on observe que le ratio $B_r/B_m$ entre 0 et 400°C est inférieur ou égal à 1,5 % et que le ratio $B_r/B_m$ entre 0 et 300°C est inférieur ou égal à 0,8%.

Le matériau est élaboré sous forme liquide puis coulé avec une forte vitesse de refroidissement, dans une installation de coulée de rubans amorphes à cylindre refroidi de type classique, de telle sorte qu'on obtienne en sortie de l'installation de coulée, une bande amorphe enroulée sous la forme d'une bobine à spires jointives.

L'installation de recuit comporte principalement un four à passage (3) qui peut être un four à résistance réalisant le chauffage de la bande par convection et rayonnement, un four à rayonnement pur ou encore une installation de chauffage de la bande par effet Joule à la traversée du four.

Le recuit de la bande pourrait également être effectué par un lit fluidisé constitué de particules solides ou liquides ou sous l'une des formes sol gel et aérosol en suspension dans un gaz porteur, le milieu de chauffage de la bande étant lui-même chauffé par contact avec un enceinte elle-même chauffée par un four de type classique, par exemple à résistance.

Le four (3) comporte une zone centrale dans laquelle la température est homogène et comprise dans l'intervalle nécessaire pour effectuer la recristallisation de la bande sous tension en défilement selon l'invention, cette température étant comprise entre 530°C et 700°C, et de préférence entre 540°C et 690°C. Dans cette plage, on fait varier la température T sensiblement selon la vitesse de production V choisie et selon la contrainte de traction σ choisie (c'est à dire aussi la perméabilité μ choisie), car augmenter V ou diminuer σ accroît la température optimale T de recuit. La limite de température supérieure de la bande de 700°C est imposée pour éviter la formation de phases constituées de borures qui fragilisent la bande et diminuent ses propriétés magnétiques.

Les mandrins d'enroulement (8) et de déroulement de la bande sont de préférence motorisés ou freinés (par exemple à l'aide d'un frein à poudre sur dérouleur) pour accroître encore la productivité du dispositif. Les blocs en S en entrée (4) et sortie (7) du four à passage (3) sont tous les deux motorisés, le bloc en S d'entrée (4) étant relié à un moteur frein (5) qui exerce un freinage et un couple de retenue sur le ruban amorphe (R) pendant tout le traitement. Le bloc en S (7) en sortie du four (3) est entraîné par un moteur, associé à un réducteur, et sert à entraîner la bande (N) afin qu'elle défile dans le four avec une contrainte de traction parfaitement régulée, ainsi qu'à une vitesse régulière pouvant dépasser 10 cm/s. La longueur du four de recuit (3) devra être adaptée à la vitesse de défilement du ruban (R), de telle sorte que la cristallisation puisse s'effectuer correctement, sachant que plus la vitesse de défilement augmente, plus la longueur du four (3)doit être augmentée.

La combinaison de ces deux blocs en S (4,7) permet d'exercer de façon parfaitement uniforme sur la largeur de bande une traction parfaitement régulée, la contrainte de traction dans la direction longitudinale axiale du ruban (R) en cours de traitement dans le four de recuit (3) étant comprise entre 2 et 1000 MPa.

Il est également possible et préférable de prévoir que les mandrins d'enroulement (8) de la bande (N) et de déroulement (2) du ruban amorphe (R) soient motorisés pour assurer une traction régulée d'amplitude faible (de l'ordre de quelques MPa) sur le ruban (R) avant passage dans le bloc en S d'entrée (4) et/ou sur la bande (N) après passage dans le bloc en S de sortie (7).

La régulation de la contrainte de traction exercée sur la bande (N) en défilement pendant le traitement de recuit est réalisée à l'aide d'un dispositif de mesure et de réglage d'effort (6).

Ce dispositif (6) peut comprendre une première poulie fixe et une seconde poulie fixe sur laquelle la bande passe successivement à l'entrée et à la sortir du dispositif de réglage d'effort. Entre ces deux poulies, le ruban (R) passe sur une poulie à axe mobile dont l'axe est parallèle à celui des axes des deux poulies fixes. La poulie de l'axe mobile est reliée par une tige de traction à un capteur d'effort fixé sur un support. Cette tige permet de mesurer en continu la traction F exercée sur le ruban (R) et le signal de mesure correspondant est transmis à un module de commande du moteur-frein (5) du bloc en S motorisé d'entrée (4) dans le four (3).

Ce moteur-frein (5) est régulé à partir du signal d'effort pour exercer sur le ruban (R) une force de retenue et de traction dans la direction longitudinale axiale égale à la force F qui constitue le paramètre de réglage. La force de traction et d'entraînement exercée par le moteur du bloc en S motorisé de sortie (7) du four (3) s'ajuste automatiquement à la valeur d'effort F imposé par !e moteur frein (5).

Par ailleurs, le dispositif (1) selon l'invention peut comprendre un premier mandrin d'enroulement de la bande et un second mandrin d'enroulement de la bande, de sorte qu'on puisse, après enroulement d'un premier tore sur le premier mandrin, couper la bande (N) et engager un partie de tête de la bande (N) sur le second mandrin, pour réaliser l'enroulement d'un second tore, sans interrompre la fabrication. Ce changement de bobines de produits finis est en particulier favorisé par le découplage total de la zone de forte traction comprise entre les deux blocs en S (4,7), des zones de faible traction avant et après ces blocs (4,7), découplage qui permet de lisser les éventuelles fluctuations brutales de contrainte. On entend ici par le mot "tore" aussi bien un tore enroulé définitivement suivant les prescriptions de dimensionnement d'un composant magnétique, qu'une bobine, demi-produit destiné ultérieurement à être mis dans une enrouleuse manuelle ou automatique de tore (comprenant les opérations de déroulage, mesure de longueur de la bande, enroulage du tore, coupe à longueur, collage de la spire externe et extraction depuis le mandrin).

On peut également ajouter au moins un galet presseur (10) sur la sortie de bloc en S (7) qui vient comprimer la bande (N) recuite lors de son passage dans le bloc en S (7) situé après la sortie de la bande (N) du four à passage (3). Ce galet supplémentaire (10) de bloc en S peut être bombé. Il est préférable et avantageux de disposer de galets bombés dans les blocs en S (4,7), car ainsi non seulement ils viennent comprimer le ruban amorphe (R) ou la bande nanocristalline (N) lors de son passage dans le bloc en S (4,7), mais ils permettent en outre de centrer automatiquement le ruban (R) ou la bande (N) défilement qui ne dévie pas de sa trajectoire, et peut subir une contrainte de traction régulière uniformément distribuée sur sa largeur et sur l'ensemble de la surface de contact des galets de bloc en S (4,7).

On peut accroître encore l'adhérence de la bande, sa stabilité et son centrage suivant l'axe transverse des rouleaux, en insérant d'autres blocs en S en ligne sur le procédé. Cela peut permettre en outre de réguler le rapport de contraintes entre la zone de traction élevée (entre blocs en S) et les zones aval et amont à traction réduite, ainsi que la répartition des contraintes localisées et donc réduire encore au final le taux de casse au km.

Le procédé selon l'invention peut également permettre de réaliser des tores enroulés à grande vitesse de forme ronde ou oblongue en différé sur un poste d'enroulage déconnecté du poste de production de recuit sous traction. Dans ce cas l'enroulage est réalisé à partir de bobines de bandes produites par recuit sous traction selon l'invention. Pour la fabrication de tores oblongs, des supports amagnétiques d'enroulage doivent être rajoutés au moment de l'enroulage de la bande issue du procédé de recuit sous traction et peuvent être ensuite enlevés après l'enrobage ou l'imprégnation du tore, ou bien encore être conservés.

Par ailleurs, il peut être intéressant d'utiliser un mandrin magnétique ou un mandrin avec aspiration pour immobiliser sur le mandrin le début de ruban.

D'une manière générale, les conditions de cristallisation de la bande à l'intérieur du four en recuit (3) sous tension sont telles que la bande comporte au moins 50% en volume de nanocristaux dont la taille est comprise entre 2 et 20 nm. Les différents cristaux sont séparés les uns des autres par la matrice constituée par la fraction de l'alliage restée amorphe.

L'un des avantages du procédé selon l'invention est de pouvoir mettre en oeuvre une gamme de contraintes de traction très large, allant de 2 à 1000 MPa. Ceci permet d'atteindre des perméabilités comprises entre 50 et 5000.

En particulier, en utilisant une contrainte de traction supérieure à 250 MPa, et mieux supérieure à 500 MPa, il est possible de fabriquer une bande nanocristalline présentant une perméabilité comprise entre 50 et 200, gamme qu'il n'était jusqu'ici pas possible d'atteindre par les procédés conventionnels (par ex FR 2 823 507). Ainsi, on a pu obtenir une perméabilité de l'ordre de 90 pour une contrainte de 400 MPa, et une perméabilité de 50 pour une contrainte de 700 MPa.

Par ailleurs, en faisant subir des contraintes de traction élevées au ruban amorphe, on peut réduire l'épaisseur de la bande nanocristalline de 3 à 10%, voire plus. Ainsi, un ruban d'une épaisseur de 20 $\mu$m pourra se voir transformé en une bande de 18 ou 19 $\mu$m. Cette réduction d'épaisseur de la bande nanocristalline a des conséquences sur les performances magnétiques des composants fabriqués à partir de celle-ci. En effet, elle permet de diminuer les courants induits dans le métal et donc les pertes magnétiques du futur noyau enroulé.

En outre, les présents inventeurs ont constaté que ces meilleures performances magnétiques sont obtenues sans dégradation du foisonnement de la bande, ce qui est tout à fait surprenant, car il est connu que plus l'épaisseur d'une feuille de métal enroulée diminue, plus le foisonnement de l'enroulement augmente.

De manière à réduire les courants induits dans le tore et les pertes magnétiques, il peut être nécessaire, en fonction des applications finales prévues pour le tore, de déposer ou de former une couche d'isolation électrique sur la bande pour isoler les spires successives les unes des autres. On peut par exemple déposer en continu, sur la bande après recuit, une substance minérale sur une épaisseur d'un dixième de micromètres à quelques micromètres.

Une telle substance minérale déposée entre les spires peut être constituée par un lait de magnésie (MgO) dont l'eau est éliminée dans une opération ultérieure d'étuvage à basse température.

Plus généralement, on peut utiliser les compositions classiques suivantes :

- Poudre $SiO_2$, MgO, $Al_2O_3$ déposée en surface par immersion dans une résine, par pulvérisation, par électrophorèse ou par toute autre technique de dépôt,
- Dépôt de fines couches de $SiO_2$, MgO, $Al_2O_3$, en surface par pulvérisation CVD, PVD ou méthode éiectrostatique,
- Solution d'alkyl-silicate dans de l'alcool, mélangée à un acide pour former de la forstérite $MgSiO_4$ après traitement thermique,
- Solution obtenue par hydrolyse partielle de $SiO_2$ et de $TiO_2$ mélangés à diverses poudres céramiques,
- Solution contenant principalement un polytitano-carbonate appliquée sur le ruban puis chauffée,
- Solution de phosphate appliquée et chauffée,
- Solution d'isolation formée par application d'un agent d'oxydation et chauffage.

De préférence, la couche d'isolation est déposée soit sur la bande déroulée de la bobine obtenue à l'issue du recuit, avant ré-enroulage sous la forme d'un ou plusieurs tores pour composant électromagnétique, soit en ligne en sortie de bloc en S moteur avant enroulage en bobine. Dans les deux cas ce dépôt est suivi en général d'un recuit à basse température pour assurer la polymérisation ou la déshydratation.

On peut également utiliser un revêtement préalable au recuit de cristallisation ayant des propriétés isolantes, déposé sur une épaisseur de 1/10 de micromètre à quelques dizaines de micromètres sur le ruban amorphe, ce revêtement résistant aux températures du recuit flash et aux fortes tractions du recuit. On peut par exemple, utiliser comme revêtement préalable de la bande amorphe, du méthylate de magnésium.

Ce type d'enduction pour isolation préalable au recuit ou pour isolation électrique de la bande recuite peut être fait par tout moyen adapté, et en particulier par enduction entre deux rouleaux, ou par dépôt de type CVD ou PVD, ou par pulvérisation, ou par lit fluidisé, etc., avec une étape complémentaire éventuelle de séchage et/ou de polymérisation et/ou de réticulation, en fonction de la nature de la matière isolante, du type de monomère et de la présence de solvant, entre autres.

Lorsque l'on utilise un revêtement isolant minéral (résistant à la température), l'enduction est de préférence effectuée sur le ruban amorphe, avant le recuit de nanocristallisation, et de façon particulièrement préférée, avant le bloc en S d'entrée. Les présents inventeurs ont constaté qu'une partie de la matière isolante se détache du ruban amorphe lors du passage dans le four de recuit, mais surtout que l'isolant résiduel permet de renforcer les caractéristiques mécaniques du ruban en diminuant sa fragilité.

En outre, la traction nécessaire pour obtenir un niveau de perméabilité prédéfini se trouve alors réduite. On peut donc atteindre des perméabilités encore plus faibles en augmentant la traction.

De façon tout à fait différente et complémentaire à l'isolation interspire, il est également possible d'enrober les tores selon l'invention —préalablement enroulés en tore selon les prescriptions géométriques dictées par l'application - par une matière plastique, telle qu'une résine époxy par exemple, cette résine pouvant être appliquée à chaud ou à froid. On a constaté qu'un enrobage de ce type ne dégradait absolument pas les performances magnétiques des tores, même lorsque la résine est appliquée à une température de l'ordre de 200°C. Cet enrobage pénètre très peu entre les spires et a pour fonction de rigidifier et protéger le tore des contraintes de bobinage, de protéger l'isolant électrique du fil de bobinage des blessures par les bords coupants de la bande enroulée, d'assurer une bonne isolation diélectrique entre tore enroulé et les bobinages.

Outre les revêtements d'isolation électrique interspire ou l'enrobage extérieur du tore pour protection électrique et mécanique du tore et de son bobinage, qui viennent d'être décrits, il est également possible d'imprégner les intervalles existants entre les spires d'un tore selon l'invention, à l'aide d'une résine fluide et durcissante spécifique sans dégradation sensible de sa perméabilité. Dans cet état le tore devient très rigide, monobloc et ainsi apte à la découpe.

Le tore imprégné ainsi produit peut alors être coupé en 2C avec un accroissement du champ coercitif $H_c$ ne dépassant pas 50 %, tandis que la perméabilité $\mu_1$ du circuit magnétique réalisé avec les 2C jointifs peut être réglée par surfaçage adéquat des surfaces de coupe à un niveau plus faible d'au plus 50 % par rapport à $\mu$.

Si, par exemple, on produit un tore imprégné selon l'invention et dont la perméabilité s'élève à $\mu=300$, on pourra

obtenir une perméabilité $\mu_1$ comprise entre 150 et 300. Cette diminution est due à l'entrefer résiduel issu de la découpe.

On voit donc qu'il est possible de mettre à disposition un tore à faible perméabilité ayant toutes les performances des nanocristallins recuits sous contrainte qui ont été décrites précédemment, ainsi qu'une géométrie à 2C permettant d'obtenir un composant final compact et ne présentant pas d'entrefer autre que résiduel, qui pourrait générer des perturbations des champs magnétiques extérieurs et des échauffements localisés vers les zones d'entrefer.

**Essais**

Une série de coulées 1 à 17, dont les compositions sont rassemblées dans le tableau 1, ont été réalisées pour obtenir des rubans amorphes selon le procédé classique de trempe sur une roue refroidie.

Ces rubans ont ensuite été soumis à différents procédés de recuit, procédés dont les caractéristiques sont rassemblées dans le tableau 2.

Une fois transformées en bandes nanocristallines par recuit sous contrainte, celles-ci ont été soumises à un certain nombre de tests de caractérisation dont les résultats sont eux aussi rassemblés dans le tableau 2.

Dans le cadre de ces essais, on appelle :

- RP : le procédé de recuit sous contrainte des nanocristallins déjà connu, utilisant un ou deux couples au moins de rouleaux pinceurs (cf. brevet FR 2 823 507).
- Direct : le procédé de recuit sous contrainte des nanocristallins déjà connu, utilisant une traction directe du ruban par les bobines d'enroulage et de déroulage (cf. brevet FR 2 823 507).
- BS : le procédé de recuit sous contrainte des nanocristallins tel que décrit dans cette invention et utilisant, par exemple, un bloc en S en entrée du four de recuit et un bloc en S à la sortie de ce four.

On utilise également les symboles suivants :

| | |
|---|---|
| $D_{MIN}$ | rayon de courbure limite de rupture de la bande, |
| $T_{TTH}$ | température de recuit de nanocristallisation, |
| $\sigma$ | contrainte de traction lors du recuit, |
| $\mu r$ | perméabilité relative, |
| $\Delta T$ | plage des valeurs de la température de recuit permettant d'obtenir $D_{MIN} \leq 3$ mm pour toute la plage de $\mu r$ accessible, |
| Br | Br induction rémanente, |
| Bm | induction à 20 Oe dite induction d'approche à saturation, |
| B(200) | induction saturante à 200 Oe. |
| Hc | champ coercitif. |

On entend par "plage de $\mu r$" l'étendue de valeurs de $\mu r$ accessible à une coulée donnée pour des caractéristiques données de procédé, à l'intérieur de la plage maximale de $\mu r$ de 50 à 5000.

Détermination de $D_{MIN}$

Le rayon de courbure limite de rupture de la bande $D_{MIN}$ est mesuré en plaçant la bande sur une série de formes calibrées en ½ rond, dont le diamètre va en décroissant, jusqu'à ce que la bande se brise. On utilise successivement et par valeurs décroissantes des diamètres de 5 à 2,5mm par pas de 0,1 mm.

Détermination de $\Delta T$

$\Delta T$ est la plage des valeurs de la température de recuit permettant d'obtenir $D_{MIN} \leq 3$ mm pour toute la plage de $\mu r$ accessible. En effet, on considère que la fragilité de la bande est compatible avec un procédé à l'échelle industrielle lorsque $D_{MIN}$ est inférieur à 3mm.

Pour déterminer la valeur de $\Delta T$, on mesure donc $D_{MIN}$ pour des bandes de diverses perméabilités, obtenues en faisant varier la contrainte de traction lors du recuit, et ceci pour différentes valeurs de la température de recuit $T_{TTH}$. Ainsi, pour une coulée de composition N°1 (cf. tableau 1), on a obtenu les valeurs suivantes :

| $T_{TTH}$ (°C) | Perméabilité μr | | | | |
|---|---|---|---|---|---|
| | 200 | 300 | 600 | 1000 | 1700 |
| 570 | 1,9 | * | 1,9 | 2,0 | 2,3 |
| 590 | 1,7 | * | 2,2 | 2,7 | 2,7 |
| 600 | 2,5 | 2,7 | 3,1 | 3,5 | 3,6 |
| * : essais non réalisés. | | | | | |

Dans cet exemple, la valeur de ΔT est estimée à 30°C entre 560 et 595°C.

On constate que plus la perméabilité augmente, plus $D_{MIN}$ augmente, pour se stabiliser vers $\mu$ = 1500 - 2000. Le ruban le moins fragile est donc celui qui a la plus faible perméabilité, ce qui est un avantage supplémentaire de miniaturisation pour les applications de type lissage/stockage d'énergie.

On note aussi que $D_{MIN}$ est très sensible à la température de recuit sous traction. Ainsi, un écart de 30°C fait passer toutes les bandes dont la perméabilité est supérieure à 500 d'un état de faible fragilité obtenue à 570°C ($D_{MIN}$ ≤ 3 mm) à un état de plus en plus fragile ($D_{MIN}$ pouvant atteindre 3,6 mm).

**Tableau 1**

| Coulée | % Co | % Ni | % Cu | % Si | % B | % Nb | M' | M" |
|---|---|---|---|---|---|---|---|---|
| 1 | < 0,01 | < 0,1 | 1,0 | 15,3 | 6,5 | 2,96 | | |
| 2 | 1,7 | < 0,1 | 1,0 | 15,3 | 6,5 | 2,96 | | |
| 3 | 5 | < 0,1 | 1,0 | 15,3 | 6,5 | 2,96 | | |
| 4 | 5 | < 0,1 | 1,0 | 15,3 | 6,5 | 2,96 | | |
| 5 | 10 | < 0,1 | 1,0 | 15,3 | 6,5 | 2,96 | | |
| 6 | < 0,01 | < 0,1 | 1,5 | 15,5 | 7 | 3,02 | | |
| 7 | < 0,01 | < 0,1 | 0,7 | 15,2 | 6,8 | 2,98 | | |
| 8 | < 0,01 | < 0,1 | 1,02 | 15,1 | 6,6 | 3,9 | | |
| 9 | < 0,01 | < 0,1 | 0,97 | 15,4 | 6,7 | 6 | | |
| 10 | < 0,01 | < 0,1 | 0,99 | 14,4 | 6,4 | 2,97 | Cr : 0,98% | |
| 11 | < 0,01 | < 0,1 | 1,03 | 14,1 | 6,3 | 2,88 | Al : 1,53% | |
| 12 | < 0,01 | < 0,1 | 1,1 | 15,3 | 5,3 | 2,95 | | C : 1,22% |
| 13 | < 0,01 | < 0,1 | 1,01 | 13,1 | 6,2 | 2,99 | V : 2,4% | |
| 14 | < 0,01 | < 0,1 | 1,02 | 12,6 | 6,3 | 2,98 | | Ge : 2,6% |
| 15 | < 0,01 | < 0,1 | 1,02 | 13,5 | 6,5 | 2,98 | | |
| 16 | < 0,01 | < 0,1 | 0,99 | 11,5 | 6,6 | 3,01 | | |
| 17 | < 0,01 | < 0,1 | 0,98 | 15,2 | 8,4 | 2,96 | | |

## Tableau 2

| Essai° | Coulée N° | Type Procédé | $D_{MIN}$ (mm) | $T_{TTH}$ (°C) | Vitesse (cm/s) | Plage σ (MPa) | ΔT plage de $T_{TTH}$ (°C) | Nb de Casse par km | $Br/Bm$ (%) | Plage de μr | Hc (A/m) | B(200) (KG) | Essai selon l'invention |
|---|---|---|---|---|---|---|---|---|---|---|---|---|---|
| | | | | **Paramètres process** | | | | | **Résultats** | | | | |
| A | 1 | RP | ≤ 2,5 | 660 | 3 | ≤500 | 30 | > 50 | < 1 | ≥ 200 | 2 à 5 | ≥ 12 | |
| B | 1 | direct | ~ 3 | 655 | 1 | ≤300 | 30 | > 10 | < 1 | ≥ 300 | 2 à 5 | ≥ 12 | |
| C | 1 | BS | ≤ 2,5 | 590 | ≥ 10 | ≤1000 | 30 | < 5 | < 1 | ≥ 50 | 2 à 5 | ≥ 12 | X |
| D | 2 | direct | 3 | 665 | 1 | ≤300 | 30 | > 10 | 1 | ≥ 350 | 6 | ≥ 12 | |
| E | 3 | direct | 3 | 665 | 1 | ≤300 | 30 | > 10 | 2 | ≥ 500 | 7 | 12 | |
| F | 4 | BS | 2,5 | 610 | ≥ 10 | ≤500 | 30 | < 5 | 2 | ≥ 280 | 6,5 | 12 | X |
| G | 5 | BS | 3 | 670 | 1 | ≤300 | 30 | 20 | 4 - 5 | ≥ 500 | 10 | 11,5 | |
| H | 6 | BS | ≤ 2,5 | 580 | ≥ 10 | ≤1000 | 30 | < 5 | < 1 | ≥ 50 | 1 à 5 | ≥ 12 | X |
| I | 7 | BS | 2,5 | 605 | ≥ 10 | ≤1000 | 30 | < 5 | < 1 | ≥ 50 | 2 à 6 | ≥ 12 | X |
| J | 8 | BS | 2,7 | 630 | 5 | ≤1000 | 40 | < 5 | < 1 | ≥ 70 | 2 à 5 | 12 | X |
| K | 9 | BS | 3,8 | 700 | 0,5 | ≤300 | 50 | < 5 | 1,7 | ≥ 200 | 8 | 11,2 | |
| L | 10 | BS | 2,6 | 590 | ≥ 10 | ≤1000 | 20 | < 5 | 1,3 | ≥ 80 | 2 à 6 | ≥ 12 | X |
| M | 11 | BS | ≤ 2,5 | 590 | ≥ 10 | ≤500 | 20 | < 5 | 1,8 | ≥ 150 | 2 à 7 | ≥ 12 | X |
| N | 12 | BS | 2,8 | 610 | 10 | ≤1000 | 13 | < 5 | < 1 | ≥ 70 | 2 à 6 | ≥ 12 | X |
| O | 13 | BS | 3,4 | 620 | 3 | ≤1000 | <10 | > 10 | 3,0 | ≥ 300 | 4 à 9 | ≥ 12 | |
| P | 14 | BS | 2,7 | 600 | ≥ 10 | ≤1000 | <10 | < 5 | 2,7 | ≥ 100 | 8 à 12 | ≥ 12 | |
| R | 15 | BS | ≤ 2,5 | 615 | 3,3 | 50 | 30 | < 5 | 5 | ≥ 100 | 5,6 | ≥ 12 | X |
| S | 15 | BS | ≤ 2,5 | 640 | 3,3 | 50 | 30 | < 5 | 3 | ≥ 100 | 7 | ≥ 12 | X |
| T | 15 | BS | ≤ 2,5 | 650 | 3,3 | 50 | 30 | < 5 | 17 | ≥ 100 | 91 | ≥ 12 | |
| U | 16 | BS | ≤ 2,5 | 620 | 3,3 | 50 | 20 | < 5 | 8 | ≥ 300 | 8 | ≥ 12 | |
| V | 17 | BS | ≤ 2,5 | 550 | 1,6 | 50 | 0 | < 5 | 15,3 | ≥ 300 | 13,6 | 11,8 | |
| W | 17 | BS | ≤ 2,5 | 550 | 2,4 | 50 | 0 | < 5 | 2,6 | ≥ 300 | 14 | 11,8 | |
| X | 17 | BS | ≤ 2,5 | 550 | 3,2 | 50 | 0 | < 5 | 9 | ≥ 300 | 26,4 | 11,8 | |

## Exemple 1 - Influence de la composition de la nuance

### Influence de la teneur en bore

Les exemples V, W et X, dont la teneur en bore est de 8,4% présentent une fragilité d'un niveau correct, avec un taux de casse inférieur à 5 casses/km.

Mais, en accroissant le pourcentage en bore, la cristallisation au défilé sous contrainte est rendue difficile, ce qui oblige à diminuer la vitesse de défilement à moins de 4 cm/sec, et ce qui limite la plage de perméabilité accessible à des perméabilités supérieures à 300. En conséquence, la teneur maximale en bore doit être limitée à 8%.

Par ailleurs, l'exemple N montre que 1,22 %C en substitution partielle du bore dégrade très peu les performances du produit.

### Influence de la teneur en niobium

L'exemple J montre que si on utilise un pourcentage de niobium de l'ordre de 3,9%, les performances magnétiques sont globalement conservées avec cependant une baisse de l'induction saturante B(200 Oe) à 12 KG au lieu de 12,5 KG, pour une composition telle que celle utilisée pour les exemples A à C, qui ne contient que 2,96% de niobium.

De plus la vitesse de défilement doit être considérablement baissée pour permettre l'obtention d'un ruban recuit sous contrainte avec les performances requises de courbure limite ($\leq$ 3 mm) et de plage de perméabilité accessible.

Si on accroît le pourcentage de niobium à 6% (exemple K), la plage de réglage en température s'accroît encore (50°C) et la plage de perméabilité accessible reste encore attractive ($\mu_{min}$ = 200). Mais, l'induction saturante B(200 Oe) se dégrade significativement à 11,2 KG, ce qui ne permet pas de fabriquer des composants aussi compacts qu'on le souhaiterait.

En outre, le diamètre limite pour l'enroulage en tore à partir de la bande nanocristallisée sous contrainte s'accroît nettement à 3,8 mm, ce qui témoigne d'une fragilisation de la bande, qui la rend très difficile à manipuler industriellement sans risque de casses fréquentes.

### Influence de la teneur en cuivre

Les exemples H et I montrent que s'écarter quelque peu d'une teneur de 1% en cuivre, pour atteindre respectivement 1,5 ou 0,7 %, ne dégrade pas significativement les performances.

### Influence de la teneur en silicium

Par rapport aux rubans des exemples A à C qui contiennent 15,3% de silicium, on constate que, si on abaisse le pourcentage en silicium à 13,5%, le métal reste apte à la production industrielle (< 5 casses/km), la plage de perméabilité accessible reste vaste ($\mu_{min}$ = 100) mais les conditions du procédé BS selon l'invention deviennent plus critiques vis à vis des caractéristiques magnétiques telles que le champ coercitif Hc.

Ainsi pour des températures de recuit de 615 et 640°C, Hc reste inférieur ou égal à 7 A/m mais, dès 650°C, Hc croît très significativement (exemple T), ce qui n'empêche pas une production industrielle, puisque la plage $\Delta$T de réglage de température de recuit sous contrainte reste élevée (- 30°C). Cependant si on baisse encore le pourcentage en silicium jusqu'à atteindre 11,5 (exemple U), le champ coercitif se dégrade pour atteindre 8 A/m lorsqu'on se trouve dans les conditions optimales de fragilité, provoquant des pertes magnétiques trop élevées pour le tore enroulé.

### Influence de la teneur en élément de type M'

Il faut limiter la teneur possible de ces métalloïdes de substitution au silicium à au plus 2%. Les exemples L et M montrent en effet que des teneurs de 1 % en chrome ou de 1,5% en aluminium ne nuisent pas à l'intérêt du produit final lorsqu'ils sont substitués au silicium.

En revanche, l'exemple O montre qu'une teneur de 2,4% en vanadium accroît nettement la fragilité du ruban (> 10 casses/km) ce qui amène à réduire la vitesse au défilé admissible du fait de cette fragilité accrue. Dans le même temps, le champ coercitif Hc se dégrade et la plage de température $\Delta$T du procédé sur laquelle des performances correctes peuvent être obtenues devient trop faible (< 10°C), rendant la bande impropre à une fabrication industrielle. De plus la plage de $\mu$r accessible est réduite à $\mu$r $\geq$ 300

### Influence de la teneur en élément de type M"

L'exemple P montre que, lorsqu'on substitue du silicium par 2,6% de germanium, le champ coercitif Hc est très dégradé ( ≥ 8 A/m) et la plage de température de recuit ΔT accessible est faible alors que les autres caractéristiques restent tout à fait intéressantes.

Influence de la teneur en cobalt

Les exemples D et E montrent que l'addition modérée de cobalt en substitution partielle au fer, à hauteur de 1,7 et 5%, dégrade la plage de perméabilité μ accessible par le procédé "direct", puisque $\mu_{min}$ passe de 300 à 350 et de 300 à 500, respectivement.

Dans le cas du procédé BS selon l'invention, la teneur admissible en cobalt apparaît être 5% (exemple F : $\mu_{min}$ = 300) alors qu'avec 10 % de cobalt, on ne peut accéder par le procédé à une perméabilité inférieure à 500 (exemple G).

## Exemple 2 - Foisonnement

Afin d'étudier l'influence de la contrainte appliquée sur le ruban sur le foisonnement du tore nanocristallin, on a préparé une série de rubans amorphes dont la composition est conforme à la coulée 1 du tableau 1, et on les a soumis à des contraintes de traction croissantes. Les conditions des essais ainsi que les résultats obtenus en terme de réduction d'épaisseur (ΔEp/Ep) et de foisonnement sont rassemblés dans le tableau 3 :

**Tableau 3**

| Contrainte (MPa) | Epaisseur (μm) | ΔEp/Ep | Foisonnement (%) |
|---|---|---|---|
| 0 | 17,9 | | 87,1 % |
| 19,9 | 17,8 | - 0,6 % | 86,7 % |
| 39,8 | 17,7 | -1,2% | 87,7 % |
| 79,5 | 17,4 | -2,8 % | 87 % |
| 119 | 17,2 | - 4,1% | 86,2 % |
| 171 | 16,8 | - 6,4% | 84,6 % |
| 200 | 16,6 | - 8,4 % | 85,3 % |
| 300 | 16,1 | - 11 % | 85, 7 % |
| 500 | 14,9 | - 16,8 % | 84,5 % |

On constate bien que le procédé selon l'invention permet de réduire l'épaisseur de la bande nanocristalline sans dégradation significative du foisonnement, ce qui n'était aucunement prévisible.

Du point de vue des applications possibles des bandes nanocristallines selon l'invention, on peut citer à titre indicatif et non limitatif :

- des capteurs de courant à forte composante continue superposée, en particulier utilisé dans certains modèles des compteurs d'énergie ;
- des sondes de courant large bande de fréquence, avec ou sans blindage, avec utilisation par exemple dans le contrôle de courant en temps réel des composants actifs d'électronique de puissance tels que GTO, IGBT, etc. ;
- des inductances de lissage ou de stockage d'énergie pour tout type de structure de convertisseur d'électronique de puissance, tel que PFC, push pull, flyback, forward, etc., permettant :

  ■ de réduire le volume du composant grâce à l'accès à des perméabilités faibles, avec des pertes magnétiques réduites et une aimantation à saturation $J_s$ élevée sous de fortes contraintes de courant continu superposé ;
  ■ d'assurer une inductance L très peu dépendante du courant continu superposé et très reproductible (≤ 10 %, de préférence ≤ 5 %) en production industrielle ;
  ■ d'éviter tout bruit acoustique du à la magnétostriction ;
  ■ d'éviter tout problème lié à la compatibilité électromagnétique ;
  ■ d'éviter tout échauffement localisé du circuit magnétique.

  ➤ **des transformateurs HF** (supérieurs à quelques centaines de kHz) comprenant des tores non coupés selon l'invention, pour une utilisation dans des alimentations à résonance, par exemple. Le tore selon l'invention est ici avantageux pour sa fréquence de coupure élevée qui peut atteindre de 20 à 200 MHz pour des perméabilités de 50 à 300, avec de faibles pertes magnétiques et une forte induction de travail accessible ($J_s > 1$ T).

➢ **des selfs de mode commun à filtrage HF** comprenant des tores non coupés selon l'invention, qui présentent l'avantage de pouvoir miniaturiser le composant grâce à la fois à un $J_s$ élevé et une grande fréquence de coupure allant de 1 à 200 MHz, et de façon préférée supérieure à 10 MHz.

**Revendications**

1. Procédé de fabrication d'une bande en matériau nanocristallin obtenue à partir d'un ruban coulé dans un état amorphe, de composition atomique :

$$[Fe_{1-a}M_a]_{100-x-y-z-\alpha-\beta-\gamma}Cu_xSi_yB_zNb_\alpha M'_\beta M''_\gamma$$

M étant l'un au moins des éléments Co, Ni,
M' étant l'un au moins des éléments V, Cr, Al et Zn,
M'' étant l'un au moins des éléments C, Ge, P, Ga, Sb, In et Be, avec :

$a \leq 0,07$ si M = Co     et     $a \leq 0,2$ si M = Ni
$0,5 \leq x \leq 1,5$     et     $2 \leq \alpha \leq 5$
$10 \leq y \leq 16,9$     et     $5 \leq z \leq 8$
$\beta \leq 2$     et     $\gamma \leq 2$

et en soumettant le ruban amorphe à un recuit de cristallisation, dans lequel on soumet le ruban au recuit à l'état déroulé, en défilement au travers d'au moins deux blocc en S et sous tension dans une direction sensiblement longitudinale axiale du ruban, de telle sorte que le ruban soit maintenu à une température de recuit comprise entre 530°C et 700°C, pendant une durée comprise entre 5 et 120 secondes, sous une contrainte de traction axiale comprise entre 2 et 1000 MPa, la contrainte de traction subie par ledit ruban amorphe, sa vitesse de défilement lors dudit recuit, le temps et la température de recuit étant choisis de telle sorte que le profil de section de la bande ne soit pas en forme de $\Omega$, et présente une flèche maximale de la section transversale de la bande inférieure à 3% de la largeur de la bande, et de préférence inférieure à 1 % de la largeur.

2. Procédé selon la revendication 1, dans lequel la vitesse de défilement de la bande est supérieure ou égale à 10 cm par seconde et par mètre de zone utile de four.

3. Procédé selon l'une ou l'autre des revendications 1 ou 2, dans lequel la contrainte de traction axiale est supérieure à 500 MPa.

4. Procédé selon l'une quelconque des revendications 1 à 3, dans lequel le taux de casse du ruban amorphe en défilement est inférieur à 10 casses par kilomètre de ruban.

5. Procédé selon l'une quelconque des revendications 1 à 4, dans lequel en outre, y est supérieur ou égal à 12.

6. Procédé selon l'une quelconque des revendications 1 à 5, dans lequel :

$a \leq 0,07$ si M = Co     et     $a \leq 0,1$ si M = Ni
$0,5 \leq x \leq 1,5$     et     $2 \leq \alpha \leq 5$
$13 \leq y \leq 16,6$     et     $5,8 \leq z \leq 8$
$\beta \leq 2$     et     $\gamma \leq 2$

7. Procédé selon la revendication 6, dans lequel :

$a \leq 0,02$ si M = Co     et     $a \leq 0,05$ si M = Ni
$0,5 \leq x \leq 1,5$     et     $2,5 \leq \alpha \leq 4$
$14,5 \leq y \leq 16,5$     et     $5,8 \leq z \leq 7,5$
$\beta \leq 1$     et     $\gamma \leq 1$

8. Bande en matériau nanocristallin pouvant être obtenue par la mise en oeuvre du procédé selon l'une quelconque des revendications 1 à 7, apte à subir en tout endroit de cette bande, un pliage avec un diamètre de courbure d'au plus 3mm, sans présenter de casse ni de fissure.

9. Bande selon la revendication 8, obtenue par la mise en oeuvre du procédé selon l'une quelconque des revendications 1 7, à partir d'un ruban amorphe, l'épaisseur de ladite bande étant réduite d'au moins 10% par rapport à l'épaisseur dudit ruban amorphe.

10. Bande selon l'une ou l'autre des revendications 8 ou 9, dont le champ coercitif est inférieur ou égal à 7A/m, et de préférence inférieur ou égal à 5A/m.

11. Bande selon l'une quelconque des revendications 8 ou 10, dont l'induction à 2000e est supérieure ou égale à 12kG.

12. Tore en matériau nanocristallin pouvant être obtenu par la mise en oeuvre du procédé selon l'une quelconque des revendications 1 à 7, à l'issue duquel on enroule ladite bande nanocristalline, et dont la perméabilité est supérieure ou égale à 50 et inférieure à 200, et dont la fréquence de coupure est comprise entre 30 et 200MHz.

13. Tore en matériau nanocristallin pouvant être obtenu par la mise en oeuvre du procédé selon l'une quelconque des revendications 1 à 7, à l'issue duquel on enroule ladite bande nanocristalline et dont le diamètre est inférieur ou égal à 10 mm.

14. Tore selon l'une quelconque des revendications 12 ou 13, présentant une diminution du foisonnement d'au plus 3% par rapport au foisonnement obtenu par enroulement d'une bande de même composition ayant subir un recuit de cristallisation sans contrainte, et ce pour une réduction d'épaisseur de la bande nanocristallisée allant jusqu'à 10% par rapport à l'épaisseur du ruban amorphe de départ.

15. Tore selon l'une quelconque des revendications 12 à 14, obtenu par mise en oeuvre du procédé selon l'une quelconque des revendications 1 à 7, à l'issue duquel on enroule une première fois ladite bande nanocristalline sur un premier mandrin, puis par déroulage et enroulage ultérieur sur un second mandrin, le diamètre du second mandrin étant inférieur au diamètre du premier mandrin.

16. Capteurs de courant apte à mesurer un courant comportant une forte composante continue et pouvant être utilisé dans un compteur d'énergie à simple ou double étage, comprenant au moins un tore en matériau nanocristallin obtenu par le procédé selon l'une quelconque des revendications 6 ou 7.

17. Inductance de stockage ou de filtrage, indépendante du niveau de composante continue superposée, pouvant être utilisée dans un compteur d'énergie, comprenant au moins un tore en matériau nanocristallin obtenu par le procédé selon l'une quelconque des revendications 6 ou 7.

18. Dispositif (1) de fabrication d'un tore magnétique à partir d'un ruban (R) coulé dans un état amorphe, par recuit dudit ruban (R) amorphe, **caractérisé en ce qu'**il comporte :

   - un arbre de réception (2) d'une bobine de ruban (R) à l'état amorphe,
   - un four à passage (3) régulé en température,
   - au moins un bloc en S (4) situé avant l'entrée du ruban (R) dans le four (3) et relié à un moteur frein (5),
   - un dispositif (6) de réglage d'une contrainte de traction dans la direction axiale dudit ruban amorphe (R) et de la bande (N) en matériau nanocristallin, ledit dispositif (6) comprenant un dispositif de mesure d'effort relié à un module de commande du moteur frein (5) dudit bloc en S situé (4) avant l'entrée du ruban (R) dans le four (3),
   - au moins un bloc en S (7) situé après la sortie de la bande (N) du four à passage (3) et relié à un moteur,
   - au moins un mandrin d'enroulement (8) pour l'enroulement de la bande (N) obtenue après recuit sous la forme d'un tore en matériau nanocristallin,

   le ruban amorphe (R) passant d'une bobine de stockage du ruban amorphe (R) engagée sur ledit arbre de réception (2) à la bobine de bande (N) en matériau nanocristallin, successivement à travers le bloc en S (4) situé avant l'entrée du ruban (R) dans le four (3), puis à travers le dispositif de mesure d'effort (6), puis à travers le four (3), puis à travers le bloc en S (7) situé après la sortie de la bande (N) du four (3).

19. Dispositif (1) selon la revendication 18, comprenant un premier mandrin d'enroulement de la bande et un second mandrin d'enroulement de la bande, de sorte qu'on puisse, après enroulement d'un premier tore sur le premier mandrin, couper la bande (N) et engager une partie de tête de la bande (N) sur le second mandrin, pour réaliser l'enroulement d'un second tore, sans interrompre la fabrication.

**20.** Dispositif (1) selon la revendication 18, comprenant un seul mandrin d'enroulement (8) de la bande (N) et un accumulateur de bande (9) en aval dudit bloc en S (7) de sortie du four (3), permettant de changer de bobine d'enroulage sans interrompre la fabrication.

**21.** Dispositif (1) selon l'une quelconque des revendications 18 à 20, comprenant en outre au moins un galet presseur (10) qui vient comprimer la bande (N) recuite lors de son passage dans le bloc en S (7) situé après la sortie de la bande (N) du four à passage (3).

**22.** Dispositif (1) selon l'une quelconque des revendications 18 à 21, comprenant en outre au moins un galet bombé qui vient comprimer le ruban amorphe (R) lors de son passage dans le bloc en S (4) situé avant l'entrée dudit ruban (R) dans le four (3).

# FIG. 1

# FIG. 2

**Office européen**
**des brevets**

**RAPPORT DE RECHERCHE EUROPEENNE**

Numéro de la demande

EP 05 29 1098

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | FR 2 823 507 A (IMPHY UGINE PRECISION) 18 octobre 2002 (2002-10-18) * le document en entier * ----- | 1 | H01F41/02 H01F1/147 H01F1/153 B21B27/00 B21B1/00 |
| X | EP 0 271 657 A (HITACHI METALS CO. LTD; HITACHI METALS, LTD) 22 juin 1988 (1988-06-22) | 8 | |
| A | * page 7,, ligne 35 - ligne 42 * * revendication 22 * ----- | 1 | |
| A | EP 0 687 134 A (HITACHI METALS, LTD) 13 décembre 1995 (1995-12-13) * page 3, ligne 40 - page 4, ligne 41 * ----- | 1,8 | |
| A | US 6 563 411 B1 (OTTE DETLEF ET AL) 13 mai 2003 (2003-05-13) * abrégé * ----- | 12 | |
| A | US 5 969 930 A (BONNIAU ET AL) 19 octobre 1999 (1999-10-19) * colonne 4, ligne 16 - ligne 22 * * colonne 4, ligne 66 - colonne 5, ligne 7 * ----- | 12 | |
| A | PATENT ABSTRACTS OF JAPAN vol. 013, no. 564 (E-860), 14 décembre 1989 (1989-12-14) & JP 01 235213 A (HITACHI METALS LTD), 20 septembre 1989 (1989-09-20) * le document en entier * ----- | 16 | |
| X | US 2 642 764 A (PORTH HENRY W) 23 juin 1953 (1953-06-23) * figure 1 * * colonne 2, ligne 47 - ligne 52 * ----- | 18 | |

**DOMAINES TECHNIQUES RECHERCHES (IPC)**

H01F
B21B

Le présent rapport a été établi pour toutes les revendications

| Lieu de la recherche | Date d'achèvement de la recherche | Examinateur |
|---|---|---|
| Munich | 20 février 2006 | Van den Berg, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 29 1098

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-02-2006

| Document brevet cité au rapport de recherche | | Date de publication | Membre(s) de la famille de brevet(s) | | Date de publication |
|---|---|---|---|---|---|
| FR 2823507 | A | 18-10-2002 | AUCUN | | |
| EP 0271657 | A | 22-06-1988 | CA | 1323219 C | 19-10-1993 |
| | | | DE | 3779070 D1 | 17-06-1992 |
| | | | JP | 2040464 C | 28-03-1996 |
| | | | JP | 3219009 A | 26-09-1991 |
| | | | JP | 7074419 B | 09-08-1995 |
| | | | KR | 9103977 B1 | 17-06-1991 |
| | | | US | 4881989 A | 21-11-1989 |
| | | | US | 5160379 A | 03-11-1992 |
| EP 0687134 | A | 13-12-1995 | DE | 69504420 D1 | 08-10-1998 |
| | | | DE | 69504420 T2 | 20-05-1999 |
| | | | JP | 7335450 A | 22-12-1995 |
| US 6563411 | B1 | 13-05-2003 | WO | 0017897 A1 | 30-03-2000 |
| | | | EP | 1114429 A1 | 11-07-2001 |
| | | | JP | 2002525863 T | 13-08-2002 |
| US 5969930 | A | 19-10-1999 | CN | 1184566 A | 10-06-1998 |
| | | | DE | 69613467 D1 | 26-07-2001 |
| | | | DE | 69613467 T2 | 11-04-2002 |
| | | | EP | 0821842 A1 | 04-02-1998 |
| | | | ES | 2160243 T3 | 01-11-2001 |
| | | | FR | 2733374 A1 | 25-10-1996 |
| | | | WO | 9633542 A1 | 24-10-1996 |
| | | | ZA | 9602965 A | 22-10-1996 |
| JP 01235213 | A | 20-09-1989 | JP | 2501860 B2 | 29-05-1996 |
| US 2642764 | A | 23-06-1953 | GB | 620873 A | 31-03-1949 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 2823507